Europäisches Patentamt

European Patent Office

Office européen des brevets

(11) Publication number: **0 300 403**
**A1**

## (12) EUROPEAN PATENT APPLICATION

(21) Application number: **88111496.1**

(22) Date of filing: **17.07.88**

(51) Int. Cl.⁴ **F16K 5/06**

(30) Priority: **20.07.87 IT 2135087**

(43) Date of publication of application:
**25.01.89 Bulletin 89/04**

(84) Designated Contracting States:
**AT BE DE ES FR GB**

(71) Applicant: **Rubinetterie A. Giacomini S.p.A.**
**Via per Alzo, 48**
**I-28017 S. Maurizio d'Opaglio Novara(IT)**

(72) Inventor: **Giacomini, Mario**
**Via Santuario 19**
**I-2810 Boleto Madonna del Sasso**
**(Novara)(IT)**

(74) Representative: **de Dominicis, Silvia Giovanna**
**et al**
**de Dominicis & Partners s.a.s. Via Brera 6**
**I-20121 Milano(IT)**

(54) Profiled sealing gasket for stopcocks with ball valves.

㉗ A profiled sealing gasket (1) for stopcocks with a
ball valve (4), in which at least one annular groove
(6) is present in the gasket annular support and
sealing surface for the ball valve. The annular groove
forms two annular ridges (7, 8) which support and
seal the ball valve. This annular groove also forms a
chamber to trap impurities. The sides (9, 10) of the
gasket adjacent to the ridges are tapered to make
the annular support and sealing ridges more flexible.

FIG. 2

EP 0 300 403 A1

## PROFILED SEALING GASKET FOR STOPCOCKS WITH BALL VALVES

### Background of the Invention

The present invention pertains to a profiled sealing gasket for stopcocks with ball valves. As is known, in stopcocks, taps, gate valves and the like with ball valves, the ball valves are supported between two sealing gaskets, one at each end of the ball valve. The gaskets are housed in seats present in the body of the stopcock and have an annular surface supporting the ball valve. This annular surface may be made at a slope approximately tangent to the outer surface of the ball, or it may exactly reproduce the outer curvature of the ball. The purpose of these configurations of the annular support surface is to provide an essentially geometrical engagement with the ball valve, so as to produce the necessary hermetic seal between the ball valve and the gaskets which support it. To obtain good sealing, however, it is necessary for the ball to sufficiently compress the two gaskets which support it. Known support gaskets for ball valves are made of polytetrafluoroethylene, hereinafter PTFE, which, as is known, is an inelastic material. To obtain good sealing, ball valves are therefore installed between the sealing gaskets with a perceptible pressure. Given the extremely smooth finish on the outer surface of the ball valves, which are chrome plated, as well as the spherical configuration of the valves themselves, the opening and closing movements of these valves are relatively easy, despite the fact that they are mounted under pressure, as mentioned above.

At the same time, these ball valves are frequently installed some time after they are manufactured, between six months and one year, for example. Since stopcocks are assembled and marketed with the valve in the open position, it often happens, in particular with ball valves larger than 1" (25.4 mm), that the edges in the surface of the ball, formed by the hole through the ball, tend to impress a depression in the annular sealing surfaces of the gaskets, with consequent adjacent dislocation of the sealing material. This dislocation of sealing material around the edges of the ball tends to jam the ball in the open position. To close the valve, it is necessary to apply a large force to the actuation handle so as to overcome the slight deformation that has occurred in the gaskets. After this "unjamming" movement, the gasket material sometimes tends to automatically redistribute itself in the correct manner, so that subsequent actuations can occur with practically normal force. When this automatic redistribution of the gasket material does not occur during the first closing and opening movements of the valve the sealing of these gaskets is compromised.

The object of the invention is to provide a PTFE gasket for ball valves which eliminates the above mentioned disadvantages, and which provides, for an equal degree of installation pressure on the ball, a smoother movement of the ball from the start and more effective sealing.

Another object of the invention is to provide, on a gasket of the type indicated, the ability to trap any impurities dragged in from the surface of ball valve. These objectives of the invention are accomplished, according to the teaching thereof, by means of a gasket of the type indicated, in which at least one annular groove is formed in the annular support and sealing surface, thereby forming at least two annular support and sealing ridges for the valve, as well as a chamber for trapping impurities, with the sides of the gasket adjacent to these ridges preferably being tapered toward the latter.

According to another aspect of the invention, the groove in the gasket annular support and sealing surface for the valve is of essentially triangular shape.

In addition, according to the invention, another embodiment features two adjacent grooves in the gasket annular support surface for the valve. These two grooves forming two outer annular ridges separated by a median rib which forms an intermediate annular sealing and support ridge.

A number of advantages are obtained with the gasket according to the invention. Firstly, with an equal amount of compression, for example, with deformation of the material by 0.5 mm, a decreased compression force results since the volume of PTFE being compressed is less; in addition, the above-mentioned annular sealing ridges act as "sealing lips", which can easily deform by lateral flattening. Another advantage is that the sealing ability of the gasket is ensured by the successive action of the annular sealing ridges which interact with the ball valve independently of one another. Another advantage is that the cavity created between the two adjacent annular sealing ridges functions as a trap for any impurities contained in the fluid. During rotation of the ball, these impurities are deposited in the trap and hence they do not exert any abrasive action on the seals which would compromise their sealing ability.

Still another advantage of the gaskets, according to the invention, is the ease with which they may be manufactured. Such manufacture involves no additional working or step compared to the manufacturing procedures for the currently known gaskets. At the same time, there is no need to modify existing ball valves in any way and the proposed gaskets can be used in taps, stopcocks and the like with their existing ball valves.

Further characteristics, advantages and details of the profiled sealing gasket according to the invention will emerge from the following description, with reference to the attached drawings in which two preferred embodiments of gaskets are shown for purely illustrative purposes.

## Brief Description of the Drawings

Figure 1 is a longitudinal cross-section taken through a vertical plane of a stopcock with a ball valve supported between gaskets according to the invention.

Figure 2 is an enlarged view of Figure 1 in the vicinity of the gasket.

Figures 3, 4 and 5 are portions of longitudinal cross-sections taken through a horizontal plane of a ball valve, with the valve being illustrated in the open position, an intermediate position and the closed position, respectively.

Figure 6 is a view similar to Figure 2 illustrating another embodiment of the gasket according to the present invention.

## Description of the Preferred Embodiments

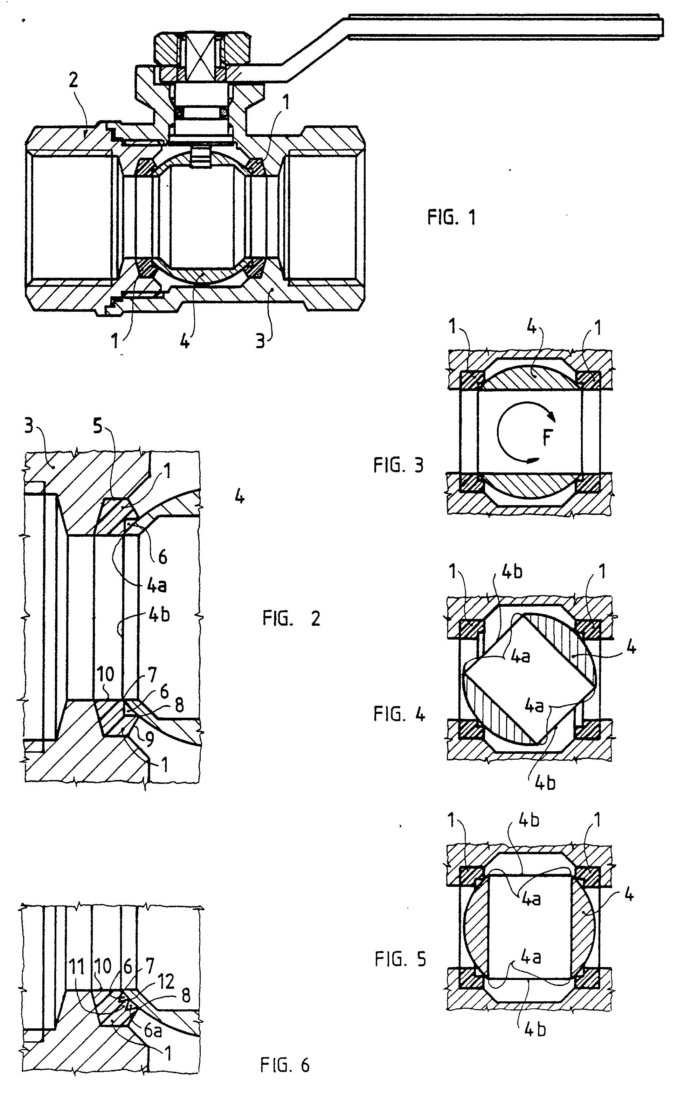

With reference to the drawings wherein like numerals represent like elements, the profiled gasket in its entirety according to the invention is designated numeral 1. This gasket is intended for use in stopcocks, taps and the like with ball valves. Shown in Figure 1 is a ball stopcock 2, comprising a valve body 3 and a ball valve 4, housed between two gaskets 1 according to the invention. The gaskets, in turn, are housed in seats 5 provided, in a manner known in the art, in the valve body 3 having a cylindrically shaped inner surface.

According to the invention, there are provided in the annular surfaces of the gaskets a groove 6, preferably of triangular shape, which forms two annular support and sealing ridges 7 and 8. The ridges comprise an essentially lip-like shape, hence they possess good elasticity and can undergo, with no impediment, small movements in either direction along the rotational direction of the ball valve 4 indicated by the double arrow F. The circular edges 4a, on the surface of the ball valve 4 formed by the radial bevels 4b, can therefore impact softly on the annular support and sealing ridges 7 and 8 due to the yielding nature of the ridges.

As the drawings indicate, any impurities present in the fluid transported during the closing movement of the valve are easily and reliably trapped in the groove 6 and therefore do not exert any abrasive action on the gaskets 1. Without the groove 6, these impurities could be dragged along the known annular surface and create furrows therein that would, over time, compromise the sealing ability of the gasket.

As the drawings indicate, the sides 9 and 10 of the gasket 1 adjacent to the annular ridges 7 and 8 exhibit, according to the invention, an oblique orientation which tapers towards these annular ridges 7 and 8. The purpose of this feature is to provide a slip ramp to facilitate impact between the edges 4a of the ball valve 4 and the annular ridges 7 and 8 of the gasket 1 during opening and closing movements of the ball. This feature also makes the annular ridges 7 and 8 sharper and more flexible.

An alternative embodiment, illustrated in Figure 6, comprises two adjacent grooves, 6 and 6a, each of which forms an annular support and sealing ridge 7 and 8, respectively. These grooves 6, 6a are divided by a median rib 11 which in turn forms a third annular support and sealing ridge 12. Thus in this embodiment there are three annular sealing ridges 7, 12 and 8. This embodiment is desirable for ball valves of larger sizes, for example, on the order of 1 inch or more.

From the description above, it is evident that with the profiled sealing gasket according to the invention the objectives of the invention are accomplished, and the above-mentioned advantages result. In particular, the gasket can be produced very simply, it provides effective sealing in the presence of modest support pressures from the ball valve, it prevents the formation of significant depressions in the gasket material which can create great difficulties in initial movements of the ball, and it creates a chamber for trapping impurities, thus preventing abrasion of the gasket by impurities dragged in by the ball.

It is within the scope of the invention to shape the annular groove, as well as any intermediate ribs, in any manner at all, and also to vary in any way the slope of the sides of the gasket adjacent to the annular sealing ridges. The dimensions and materials may also be freely selected without departing from the scope of the invention.

All of the characteristics that may be gathered from the specification, the claims and the drawings are considered within the scope of the present invention, both individually and in any combination among them.

## Claims

1. In a stopcock having a ball valve, a gasket for sealing said ball valve comprising:

a) an annular body in which is formed an annular support surface;

b) a first annular groove, said annular groove disposed in said annular support surface;

c) first and second annular ridges said annular ridges being formed by said annular groove, said annular ridges supporting and sealing said ball valve; and

d) an annular chamber, said annular chamber being formed by said annular groove, said annular chamber capable of trapping impurities deposited onto the surface of said ball valve.

2. Gasket according to claim 1 further comprising two sides, said two sides being adjacent to said annular ridges and obliquely tapered toward them.

3. Gasket according to claim 1 wherein said annular groove is of a triangular shape.

4. Gasket according to claim 3 further comprising two sides, said two sides being adjacent to said annular ridges and obliquely tapered toward them.

5. Gasket according to claim 1 further comprising a second annular groove disposed in said annular support surface adjacent to said first annular groove, said second annular groove forming a third annular ridge adjacent to said first and second annular ridges whereby said second annular ridge forms a median rib between the first and third annular ridges.

6. Gasket according to claim 5 further comprising two sides, said two sides being adjacent to said annular ridges and obliquely tapered toward them.

7. In a valve having a body, said body having an approximately cylindrical inner surface; a moveable spherical shaped member for regulating the flow through said valve, said movable spherical member being enclosed within said cylindrical inner surface; a device for sealing between said cylindrical inner surface and said movable spherical member comprising:

a) an annular member affixed within said cylindrical inner surface, a portion of the surface of said annular member contacting a portion of the surface of said movable spherical member, said contact extending 360° around both of said members;

b) a groove, said groove disposed in said contacting surface of said annular member, said groove extending 360° around said contacting surface, said groove forming ridges which contact said contacting surface of said movable spherical member.

8. Sealing device according to claim 7 wherein said annular member is comprised of PTFE material.

FIG. 1

FIG. 2

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 347 517 (SCARAMUCCI) <br> * column 4, lines 45-49; column 1, line 60; figures 6,3 * | 1-8 | F 16 K 5/06 |
| A | US-A-3 365 167 (SCARAMUCCI) <br> * figures 7,8 * | 1-4 | |
| A | US-A-3 356 333 (SCARAMUCCI) <br> * figure 3 * | 1-4 | |
| A | DE-A-2 924 308 (KLINGER) <br> * figures 2,3 * | 5,6 | |

TECHNICAL FIELDS SEARCHED (Int. Cl.4)

F 16 K 5/00

The present search report has been drawn up for all claims

| Place of search | Date of completion of the search | Examiner |
|---|---|---|
| BERLIN | 13-10-1988 | SCHLABBACH M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P0401)